# EUROPEAN PATENT SPECIFICATION

(11) **EP 1 384 736 B1**
(45) Date of publication and mention of the grant of the patent: **12.08.2009**
(21) Application number: 02705387.5
(22) Date of filing: 20.03.2002
(51) Int. Cl.: C08G 18/32, C08L 75/00, C08K 5/52, G02B 1/04, G02B 1/10

(54) **TRANSPARENT MOLDED OBJECTS, OPTICAL MEMBER, PLASTIC LENS, AND PROCESSES FOR PRODUCING THESE**
TRANSPARENTE FORMKÖRPER, OPTISCHES ELEMENT, KUNSTSTOFFLINSE UND HERSTELLUNGSVERFAHREN DAFÜR
OBJETS MOULES TRANSPARENTS, ELEMENT OPTIQUE, LENTILLES PLASTIQUES, ET LEURS PROCEDES DE PRODUCTION

(30) Priority: 21.03.2001 JP 2001081518; 21.03.2001 JP 2001081720; 01.02.2002 JP 2002025923; 01.02.2002 JP 2002025934; 01.02.2002 JP 2002025953
(43) Date of publication of application: 28.01.2004
(60) Divisional application: 09161421.4
(73) Proprietor: HOYA CORPORATION, Shinjuku-ku, Tokyo 161-8525 (JP)
(72) Inventor: KITAHARA, Yoshitaka c/o Hoya Corporation, Shinjuku-ku, Tokyo 161-8525 (JP); OHTA, Hiroshi c/o Hoya Corporation, Shinjuku-ku, Tokyo 161-8525 (JP); KADOTA, Masanori c/o Hoya Corporation, Shinjuku-ku, Tokyo 161-8525 (JP); MITSUISHI, Takeshi c/o Hoya Corporation, Shinjuku-ku, Tokyo 161-8525 (JP); SHINDE, Ken-ichi c/o Hoya Corporation, Shinjuku-ku, Tokyo 161-8525 (JP); KAMURA, Hitoshi c/o Hoya Corporation, Shinjuku-ku, Tokyo 161-8525 (JP)
(74) Representative: Zimmermann & Partner
(86) International application number: PCT/JP2002/002666
(87) International publication number: WO 2002/074828

(56) References cited:
- EP-A- 0 404 111
- EP-A- 0 518 687
- WO-A-99/38034
- JP-A- 3 287 641
- JP-A- 11 043 493
- JP-A- 56 116 003
- JP-A- 2000 256 377
- JP-A- 2002 071 903
- US-A- 4 670 479
- US-A- 5 221 721
- US-A- 5 594 088
- US-A- 6 010 778
- US-A- 6 127 505
- US-A- 6 127 505
- PATENT ABSTRACTS OF JAPAN vol. 0161, no. 14 (C-0921), 23 March 1992 (1992-03-23) & JP 3 287641 A (ASAHI OPTICAL CO LTD), 18 December 1991 (1991-12-18)

## Description

### Technical Field

The present invention relates to transparent molded articles such as lenses and methods of manufacturing the same. In particular, the present invention relates to transparent molded articles having good transparency and mold releasing property from a forming mold, comprising polyurea having intramolecular urethane bonds, that are suited to optical applications, and a method of manufacturing the same. The present invention further relates to optical members having an antireflective film on a polyurethane urea polymer substrate.

### Technical Background

Compared to glass, plastics are lighter, more crack resistant, and lend themselves more readily to dyeing. Thus, they are employed in optical applications such as various lenses, including eyewear lenses. Typical examples are polydiethylene glycol bisallylcarbonate and polymethyl methacrylate. However, these have a low refractive index of about 1.50 and a specific gravity of about 1.2 or more. Thus, for example, when employed in eyewear lenses, as the degree of magnification becomes greater, the thickness near the center of the lens and the edge thickness must be made thicker, running the risk of compromising one of the superior properties of plastics in the form of light weight. Although they have a lesser tendency to crack than glass, there is great need for even better resistance to cracking. In response, to further utilize characteristics of plastics that is light and crack resistant, polycarbonate obtained by injection molding and polythiourethane obtained by cast polymerization have begun to be employed in optical applications. Despite having extremely high strength, polycarbonate has low resistance to solvents, a common drawback of injection molded materials. And although polythiourethane does not exhibit the common drawback of injection molded materials, it is presently inferior in strength to polycarbonate.

Accordingly, to avoid the common drawbacks of injection molded materials, there is a need for a material that can be obtained by cast polymerization and has strength comparable to that of polycarbonate. Materials having such characteristics are known in the form of materials obtained by cast polymerizing an isocyanate terminal prepolymer having intramolecular urethane bonds with an aromatic diamine (U.S. Patent Nos. 5,962,617 and 6,127,505). A method of molding resin compositions comprising an isocyanate reactive polymer, a steric hindered aromatic diamine, and an internal mold releasing agent in the form of a fatty acid zinc salt is also known (Japanese Examined Patent Publication (KOKOKU) Heisei No. 3-39533).

However, the material disclosed in U.S. Patent No. 5,962,617 has problems in that the aromatic diamine employed is solid at ordinary temperature and the polymerization reaction is rapid, resulting in residual melting and a molded article of low transparency. The material itself disclosed in U.S. Patent No. 6,127,505 has adequate transparency as an optical material. However, when manufactured by cast polymerization, there remains a significant problem in the form of mold releasing properties.

Accordingly, the present inventors investigated polyurethane urea materials such as those disclosed in U.S. Patent No. 6,127,505 with regard to improving the mold releasing property thereof by using various internal mold releasing agents together. They discovered that when silicone, fluorine, and metallic salt-based mold releasing agents commonly used for plastics or the acid phosphate alkyl esters disclosed in Japanese Unexamined Patent Publication (KOKAI) Heisei No. 1-163012 and Showa No. 64-45611 were employed as internal mold releasing agents, there were problems such as reduced transparency due to haze and the like, reduced strength, and inadequate mold releasing properties. Improvement of mold releasing properties with the fatty acid zinc disclosed in Japanese Examined Patent Publication (KOKOKU) Heisei No. 3-39533 was also investigated. Since the molded products disclosed in Japanese Examined Patent Publication (KOKOKU) No. 3-39533 are themselves opaque, there is no problem if incorporating fatty acid zinc to a degree where adequate mold releasing properties are achieved. However, since the fatty acid zinc is present in the molded article in crystalline form, it scatters light, precluding the use of fatty acid zinc as an internal mold releasing agent in transparent molded articles in practice.

The material disclosed in U.S. Patent No. 6,127,505 is a polyurea having intramolecular urethane bonds that can be cast polymerized and having strength comparable to that of polycarbonate. However, as described above, there is a problem in that adequate mold releasing properties cannot be achieved with common internal mold releasing agents during cast polymerization.

Accordingly, the first object of the present invention is to provide a molded article with good transparency and good mold releasing property from a forming mold that is suited to optical applications, and a method of manufacturing the same.

Further, the material itself disclosed in U.S. Patent No. 6,127,505 achieves adequate transparency as an optical material by devising an aromatic diamine that is a starting material. However, there is a major drawback in that yellowing caused by heat and light (particularly ultraviolet radiation) occurs during polymerization as the result of oxidation of the aromatic diamine.

To commute for this point, U.S. Patent No. 6,127,505 describes the use of UV-absorbing agents, light stabilizers, and anti-oxidants. However, only common products are listed and there is no mention of specific formulation quantities and the like. As a result, this does not amount to an adequate countermeasure in practice, with yellowing caused by heat and light during polymerization remaining as a major problem.

Accordingly, the second object of the present invention is to provide a transparent molded article having good transparency, tending not to yellow due to heat and light, and having suitability to optical applications, that is a material obtained by cast polymerizing an isocyanate terminal prepolymer having an intramolecular urethane bond with an aromatic diamine, and a method of manufacturing the same.

It is well known that an antireflective film is applied on a surface of a synthetic resin to improve surface refractive characteristics of an optical member composed of a synthetic resin. For example, Japanese Unexamined Patent Publication (KOKAI) Showa No. 56-116003 discloses an optical member comprising a substrate in the form of CR-39 (diethylene glycol bisallylcarbonate) resin and an antireflective film having, in sequence from the substrate, an underlayer comprised of SiO₂ 1.5 λ in film thickness, a first layer about 0.25 λ in total film thickness comprised of a two-layer equivalent film comprised of a ZrO₂ layer and a SiO₂ layer, a second layer about 0.50 λ in film thickness comprised of ZrO₂, and a third layer about 0.25 λ in film thickness comprised of SiO₂, on a CR-39 resin.

However, in contrast to glass substrates, resin substrates do not permit the formation of an antireflective film by raising the substrate temperature during vapor deposition. Thus, the ZrO₂ layer, for example, formed by vapor deposition does not have adequate heat resistance. Further, the heat resistance of the layer comprised of ZrO₂ tends to decrease significantly over time. In some cases, such an optical member in which the overall heat resistance of an antireflective film is inadequate as well as the heat resistance drops significantly over time has a practical problem, for example, as eyewear lenses. This is because plastic eyewear frames are heated when the eyewear lenses are inserted into frame and this heat is transmitted to the eyewear lens. In antireflective films with low heat resistance, differences in thermal expansion coefficients sometimes cause cracks (fine fissures).

To solve such problems of heat resistance, Japanese Unexamined Patent Publication (KOKAI) Heisei No. 2-291502, for example, discloses an optical member having an antireflective film employing vapor deposition films comprising Ta₂O₅, ZrO₂, and Y₂O₃ on a high refractive index layer, and a vapor deposition composition forming a vapor deposition film comprising Ta₂O₅, ZrO₂, and Y₂O₃.

Particularly in the field of eyewear, there is a demand for a new optical member having a plastic lens substrate with an antireflective film of extremely good heat resistance that decreases as little as possible.

Since a resin substrate has better elasticity than a glass substrate, there is a demand for providing an antireflective film of high film strength that will not crack when force is exerted on the substrate causing it to flex.

Accordingly, the third object of the present invention is to provide an optical member comprising a substrate in the form of a material comprised of polyurethane urea polymer and having an antireflective layer that is suited to the substrate and has a good heat resistance and high film strength as well as that is undergone little reduction of heat resistance over time.

The present inventors conducted extensive research into the development of materials suited to optical applications that imparted good mold releasing properties without compromising the transparency of polyurethane urea materials such as those described in U.S. Patent No. 6,127,505. As a result, they discovered that an optical material obtained by casting and curing a composition comprised of a component comprising a specific isocyanate terminal prepolymer, a component comprising a specific aromatic diamine, and a component in the form of a mixture of phosphoric acid monoester and phosphoric acid diester respectively having a specific structure was suited to the above-stated object; the first aspect of the present invention was achieved.

Further, the present inventors conducted extensive research into the development of a material suited to optical applications that imparted good resistance to oxidation (resistance to yellowing) without compromising transparency in materials obtained by cast polymerization of an isocyanate terminal prepolymer having an intramolecular urethane bond and an aromatic diamine, such as is disclosed in U.S. Patent No. 6,127,505. As a result, they discovered that an optical material obtained by casting and curing a composition comprised of a component comprising specific isocyanate terminal prepolymer, a component comprising a specific aromatic diamine, and a component comprising a phosphorous peroxide decomposition agent was suited to the above-stated second object; the second aspect of the present invention was achieved.

### Disclosure of the Invention

One aspect of the present invention to achieve the above-mentioned objects is as follows;
(1) A transparent molded article comprised of a polymer of the following components (A), (B) and (G).
   Component (A): isocyanate terminal prepolymer in the form of a reaction product of an aliphatic diisocyanate having an intramolecular cyclic structure and a diol having an average molecular weight of 300-2,500
   Component (B): one or more aromatic diamines denoted by general formula (I). 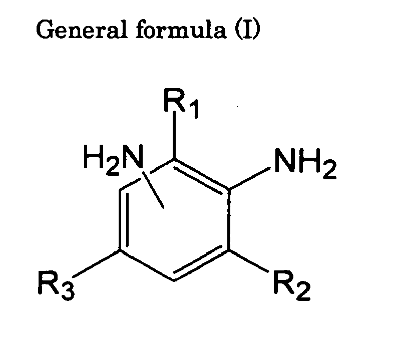 (In general formula (I), R₁, R₂ and R₃ are each independently any of a methyl, ethyl or thiomethyl group.)
   Component (G): one or more phosphorous peroxide decomposing agents comprising a structure denoted in the general formula (V) 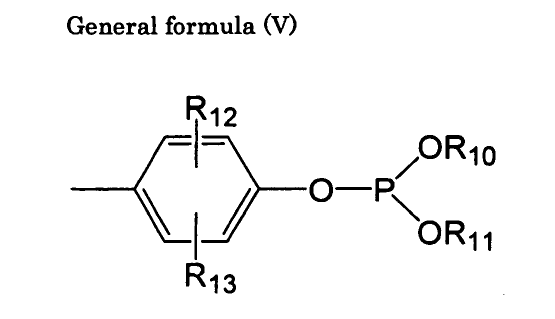 (In general formula (V), R₁₀ denotes a phenyl group optionally substituted with an alkyl group with a carbon number of 1 - 6, or an alkyl group with a carbon number of 1-16, R₁₁ denotes a phenyl group substituted with an alkyl group with a carbon number of 1 - 6, or an alkyl group with a carbon number of 1 -16, and R₁₂ and R₁₃ are each independently any of a hydrogen atom or an alkyl group with a carbon number of 1-10.)
(2) The transparent molded article according to (1), wherein the weight of component (G) ranges from 0.02 to 5.0 percent of the total weight of components (A), (B) and (G).
(3) The transparent molded article according to any of (1)-(2), wherein, in general formula (V), R₁₀ and R₁₁ are an alkyl group with a carbon number of 12-14.
(4) The transparent molded article according to any of (1)-(3), wherein the aliphatic diisocyanate having an intramolecular cyclic structure, that is a starting material of component (A), is an alicyclic diisocyanate.
(5) The transparent molded article according to (4), wherein the alicyclic diisocyanate is at least one selected from the group consisting of 4,4'-methylenebis(cyclohexyl isocyanate), isophorone diisocyanate, 1,3-bis(isocyanate methyl)cyclohexane and norbornene diisocyanate.
(6) The transparent molded article according to any of (1)-(5), wherein the diol having an average molecular weight of 300-2,500, that is a starting material of component (A), is a polyether diol or polyester diol.
(7) The transparent molded article according to any of (1)-(6), wherein the isocyanate group content of component (A) ranges from 10 to 20 weight percent.
(8) The transparent molded article according to any of (1)-(7), wherein, in general formula (I), R₁ is a methyl group, and R₂ and R₃ are independently any of an ethyl group or thiomethyl group.
(9) The transparent molded article according to any of (1)-(8), wherein the molar ratio of the isocyanate group of component (A) to an amino group of component (B) ranges from 1.00 to 1.15.
(10) The transparent molded article according to any of (1)-(9), wherein the transparent molded article is a lens.
(11) The transparent molded article according to (10), wherein the lens is an eyewear lens.
(12) The transparent molded article according to any of (1)-(11), wherein said transparent molded article has a cured coating film on the surface.
(13) The transparent molded article according to (12), wherein said cured coating film is one obtained from a coating composition comprising components (E) and (F).
   Component (E): an organic silicon compound denoted by general formula (IV) or a hydrolysis product thereof.

      (R₇)ₐ(R₉)_{b}Si(OR₈)_{4-(a+b)} (IV)

      (In general formula (IV), R₇ is an organic group comprising an epoxy group, methacryloxy group, mercapto group, amino group, or phenyl group; R₈ is an alkyl group with a carbon number of 1-4 or an acyl group with a carbon number of 1-4; R₉ is an alkyl group with a carbon number of 1-6; and a and b denote an integer 1 or 0.)
   Component (F): metal oxide colloid particles
(14) The transparent molded article according to any of (1)-(13), wherein said transparent molded article has an antireflective film on the surface or on said cured coating film.
(15) The transparent molded article according to (14), **characterized in that** said antireflective film is a multilayer antireflective film, and at least one layer of the multilayer antireflective film is a high refractive index layer comprising niobium oxide.
(16) A method of manufacturing a transparent molded article, comprising forming a molded article by pouring a mixture of components (A), (B), and (G) according to any of (1)-(9) into a forming mold, and then polymerizing components (A) and (B).
(17) The method of manufacturing a transparent molded article according to (16), wherein said mixture is prepared by further mixing component (B) with a mixture of components (A) and (G).

### Best Modes of Implementing the Invention

The transparent molded article of the present invention is comprised of a polymer of components (A), (B) and (G).

### Component (A)

Component (A) is an isocyanate terminal prepolymer in the form of a reaction product of an aliphatic diisocyanate having an intramolecular cyclic structure and a diol having an average molecular weight of 300-2,500. Making the diisocyanate, one starting material of the aforementioned isocyanate terminal prepolymer, an aliphatic diisocyanate having an intramolecular cyclic structure facilitates control of the reaction during manufacturing or polymerizing the prepolymer and imparts suitable elasticity to the molded article finally obtained. Further, it imparts high heat resistance and good mechanical characteristics to the molded article obtained.

The aliphatic diisocyanate having an intramolecular cyclic structure is an aliphatic diisocyanate having a cyclic structure in the main chain or in the side chain. The cyclic structure may be alicyclic, aromatic, or heterocyclic. However, the aliphatic diisocyanate having an intramolecular cyclic structure is desirably an alicyclic diisocyanate from the perspective of preventing yellowing and maintaining adequate elasticity and hardness. Molded articles obtained with isocyanate having an aromatic ring tend to yellow more than those obtained with alicyclic diisocyanate; molded articles obtained with aliphatic chain-structured isocyanate tend to be softer and lose their shape more readily.
Examples of alicyclic diisocyanates are: 4,4'-methylenebis(cyclohexyl isocyanate), isophorone diisocyanate, 1,2-bis(isocyanate methyl)cyclohexane, 1,3-bis(isocyanate methyl)cyclohexane, 1,4-bis(isocyanate methyl)cyclohexane, 1,2-diisocyanate cyclohexane, 1,3-diisocyanate cyclohexane, 1,4-diisocyanate cyclohexane, and norbornene diisocyanate. Examples of diisocyanates having aromatic rings are: m-xylylene diisocyanate, o-xylylene diisocyanate, p-xylylene diisocyanate, and m-tetramethylxylylene diisocyanate. It is particularly preferable that it is at least one selected from the group consisting of 4,4'-methylenebis(cyclohexyl isocyanate), isophorone diisocyanate, 1,3-bis(isocyanate methyl)cyclohexane, and norbornene diisocyanate.

The average molecular weight of the diol that is the other starting material of the isocyanate terminal prepolymer of component A is 300-2,500. When the average molecular weight of the diol is less than 300, toughness cannot be imparted to the molded article obtained, and when greater than 2,500, the molded article obtained becomes soft and does not retain its shape. The average molecular weight of the diol is desirably 400-1,000. Examples of diols having an average molecular weight of 300-2,500 are polyether diols and polyester diols. These diols are preferred because of good compatibility with the other component. In the case of a diol of poor compatibility, it becomes necessary to add another component in the form of a compatibility enhancer to maintain the transparency of the molded article obtained, potentially resulting in loss of transparency.

Examples of such diols are: polyoxyethylene glycol, polyoxypropylene glycol, polyoxytetramethylene glycol, polyester diol comprised of ethylene glycol and adipic acid, polyester diol comprised of propylene glycol and adipic acid, polyester diol comprised of diethylene glycol and adipic acid, polyester diol comprised of 1,4-butane diol and adipic acid, polyester diol comprised of neopentyl glycol and adipic acid, polyester diol comprised of 1,6-hexanediol and adipic acid, polyester diol comprised of 1,10-decanediol and adipic acid, polyester diol comprised of 1,4-butanediol and sebacic acid, polycaprolactone diol comprised of ethylene glycol and ε -caprolactone, polycaprolactone diol comprised of propylene glycol and ε -caprolactone, polycaprolactone diol comprised of diethylene glycol and ε -caprolactone, polycaprolactone diol comprised of 1,4-butane diol and ε -caprolactone, polycaprolactone diol comprised of neopentyl glycol and ε -caprolactone, polycaprolactone diol comprised of 1,6-hexane diol and ε -caprolactone, polycaprolactone diol comprised of 1,10-decane diol and ε -caprolactone, and polycarbonate glycol. Preferred examples are: polyoxypropylene glycol, polyoxytetramethylene glycol, polyester diol comprised of 1,4-butane diol and adipic acid, polyester diol comprised of neopentyl glycol and adipic acid, polyester diol comprised of 1,6-hexane diol and adipic acid, and polyester diol comprised of 1,10-decane diol and adipic acid.

The isocyanate group content of isocyanate terminal prepolymer component (A) desirably falls within a range of 10-20 weight percent. When the above-stated isocyanate group content falls below the above-seated range, the hardness of the molded article obtained tends to decrease, and when the above-stated range is exceeded, it tends to become difficult to obtain toughness (adequate strength) of a molded article obtained. The above-stated isocyanate group content further preferably falls within a range of 11-15 weight percent.

### Component (B)

Component (B) is one or more aromatic diamines denoted by general formula (I).
In general formula (I), R₁, R₂, and R₃ are each independently any of a methyl, ethyl, or thiomethyl group. Employing substituents R₁, R₂, and R₃ mentioned above can suppress crystallinity and enhance compatibility with the other components. When these substituents are absent or present in low numbers, crystallinity rises, resulting in handling difficulty. When employing the other substituents, compatibility with the other components deteriorates, resulting in apprehensively decreasing the transparency of the material obtained.

The following compounds are more specific examples of the above-stated aromatic diamines: 1,3,5-trimethyl-2,4-diaminobenzene, 1,3,5-trimethyl-2,6-diaminobenzene, 1,3,5-triethyl-2,4-diaminobenzene, 1,3,5-triethyl-2,6-diaminobenzene, 1,3,5-trithiomethyl-2,4-diaminobenzene, 1,3,5-trithiomethyl-2,6-diaminobenzene, 3,5-diethyl-2,4-diaminotoluene, 3,5-diethyl-2,6-diaminotoluene, 3,5-dithiomethyl-2,4-diaminotoluene, 3,5-dithiomethyl-2,6-diaminotoluene, 1-ethyl-3,5-dimethyl-2,4-diaminobenzene, 1-ethyl-3,5-dimethyl-2,6-diaminobenzene, 1-ethyl-3,5-dithiomethyl-2,4-diaminobenzene, 1-ethyl-3,5-dithiomethyl-2,6-diaminobenzene, 1-thiomethyl-3,5-dimethyl-2,4-diaminobenzene, 1-thiomethyl-3,5 dimethyl-2,6-diaminobenzene, 1-thiomethyl-3,5-diethyl-2,4-diaminobenzene, 1-thiomethyl-3,5-diethyl-2,6-diaminobenzene, 3-ethyl-5-thiomethyl-2,4-diaminotoluene, 3-ethyl-5-thiomethyl-2,6-diaminotoluene, and 3-thiomethyl-5-ethyl-2,4-diaminotoluene.
In the above-listed aromatic diamines, R₁ is desirably a methyl group and R₂ and R₃ each desirably represent either an ethyl group or thiomethyl group, in which case the molded article obtained tends not to fog and can be imparted with adequate toughness.
More specific examples of the above-stated aromatic diamines are: 3,5-diethyl-2,4-diaminotoluene, 3,5-diethyl-2,6-diaminotoluene, 3,5-dithiomethyl-2,4-diaminotoluene, and 3,5-dithiomethyl-2,6-diaminotoluene.

As for the ratio of components (A) and (B), the molar ratio of the isocyanate group of component (A) with respect to the amino group of component (B) desirably falls within a range of 1.00-1.15 from the perspective of achieving adequate toughness (strength). The-above-stated molar ratio further preferably falls within a range of 1.02-1.12.

### Component (G)

Component (G) is one or more phosphorus peroxide decomposing agents having the effect of inhibiting yellowing by decomposing peroxides generated by heat and light during the oxidation process. Although sulfur peroxide decomposing agents are known to exhibit the same effect, they are unsuitable because they react with the amine compounds present in the above-mentioned component (B) and other stabilizing agents, diminishing activity and causing coloration. Thus, the use of phosphorus-based compounds is important. Of these, from the perspective of compatibility with other components, those comprising the structure denoted by general formula (V) above, where R₁₀ and R₁₁ are each independently a phenyl group optionally substituted with an alkyl group with a carbon number of 1-6, or an alkyl group with a carbon number of 1-16, and R₁₂ and R₁₃ are each independently a hydrogen atom or an alkyl group with a carbon number of 1-10, are preferred. Those in which R₁₂ and R₁₃ in general formula (V) are each independently an alkyl group with a carbon number of 12-14 are of even greater preference from the perspective of high solubility in components (A) and (B).

Examples of such a phosphorus peroxide decomposing agents are given below.

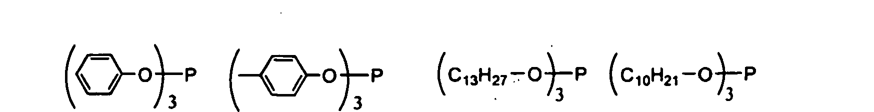

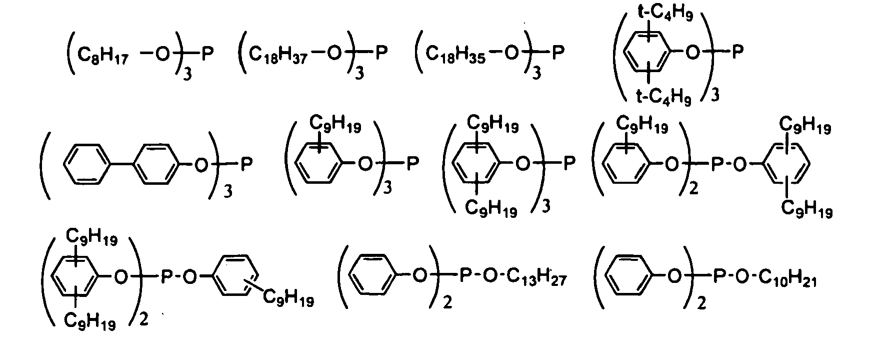

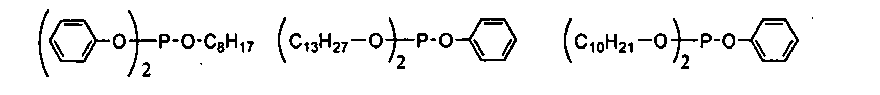

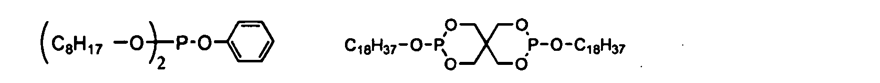

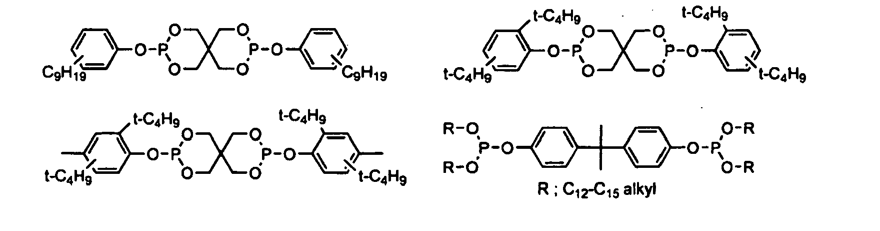

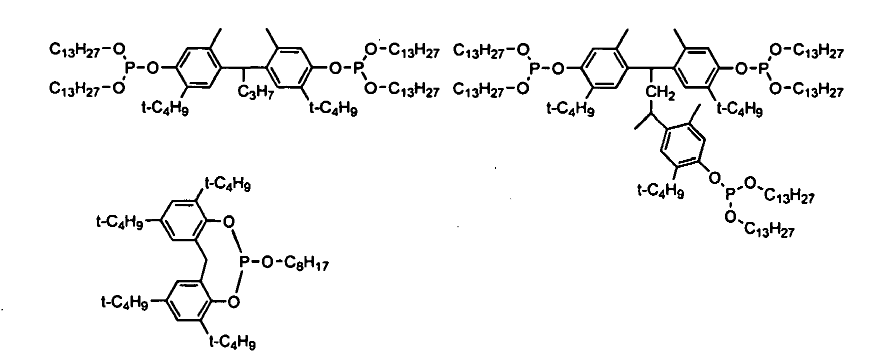

Further, particular preferred phosphorus peroxide decomposing agents are given below.

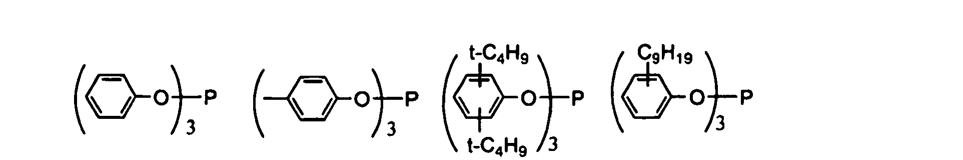

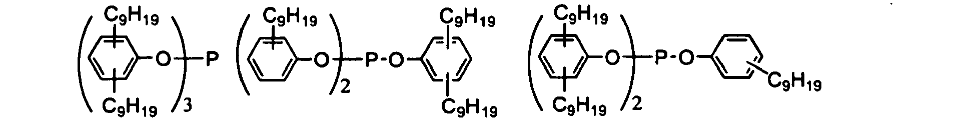

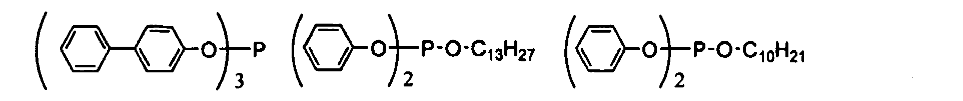

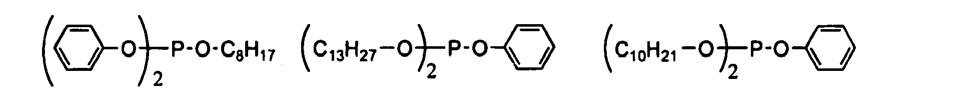

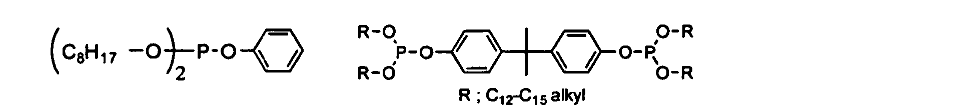

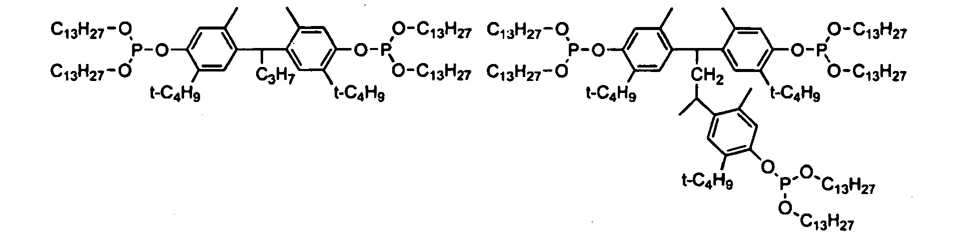

Further preferred phosphorus peroxide decomposing agents are given below.

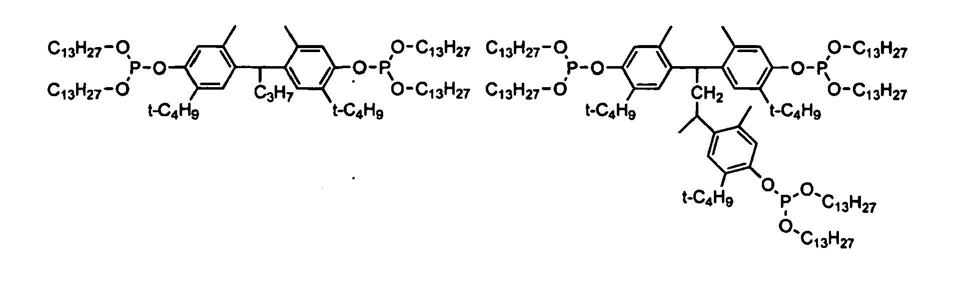

The weight of component (G) desirably falls within a range of 0.02-5.0 percent of the total weight of components (A), (B), and (G). When the weight of component (G) is below the above-stated range, it becomes difficult to achieve an inhibiting effect on yellowing. When exceeding the above-stated range, transparency sometimes decreases. More preferably, the weight of component (G) falls within a range of 0.1-2.0 percent of the total weight of components (A), (B), and (G).

### Manufacturing Method

The transparent molded article of the present invention can be manufactured, for example, by a method comprising forming a molded article by pouring a mixture of components (A), (B) and (G) mentioned above into a forming mold, and then polymerizing components (A) and (B).
However, since the polymerizing property (reactivity) of components (A) and (B) is high and reaction progresses even at ordinary temperature, it is preferred that the mixture (mixture of components (A), (B) and (G)) is prepared by first adding component (G) to component (A), mixing, and further mixing component (B) with the uniformly melted product (mixture), and after preparation, it is rapidly poured into the forming mold.
For the polymerizing reaction condition and the like, suitable reference can be made to the conditions and the like recorded at column 5 of U. S. Patent No. 6,127,505; these conditions will also be explained in detail in embodiments described further below herein.

Additives such as ultraviolet-absorbing agents, anti-oxidants, light stabilizers, mold releasing agents, and decolorants may be added as needed to the molded article of the present invention in addition to component (G) to the extent that the transparency and mechanical characteristics of the molded article of the present invention are not lost.

Among these, examples of additives in the form of mold releasing agents include mixtures of components (C) and (D).

### Component (C)

Component (C) is one or more phosphoric acid monoesters denoted by general formula (II). In general formula (II), R₄ denotes an alkyl group with a carbon number of 1-10 and n₁ is 1 or 2. Phosphoric acid monoesters within this range yield a molded product that does not fog and has good transparency. From the perspective of achieving optimal compatibility with other components, preferred is a phosphoric acid monoester in which R₄ in general formula (II) is an alkyl group with a carbon number of 2-6. Further, n₁ is desirably 1.

Examples of phosphoric acid monoesters denoted by general formula (II) are: methoxyethyl acid phosphate, ethoxyethyl acid phosphate, propoxyethyl acid phosphate, butoxyethyl acid phosphate, pentyloxyethyl acid phosphate, hexyloxyethyl acid phosphate, heptyloxyethyl acid phosphate, octyloxyethyl acid phosphate, nonyloxyethyl acid phosphate, and decyloxyethyl acid phosphate. Particularly preferred phosphoric acid monoesters are, for example, ethoxyethyl acid phosphate, propoxyethyl acid phosphate, butoxyethyl acid phosphate, pentyloxyethyl acid phosphate, and hexyloxyethyl acid phosphate.

### Component (D)

Component (D) is one or more phosphoric acid diesters denoted by general formula (III). In general formula (III), since R₅ and R₆ are each independently an alkyl group with a carbon number of 1-10, and n₂ and n₃ are 1 or 2, fogging of the molded article obtained can be prevented and a molded article with good transparency can be obtained. From the perspective of achieving optimal compatibility with other components, it is desirable that R₅ and R₆ in general formula (III) are each independently an alkyl group with a carbon number of 2-6.

Examples of the phosphoric acid diesters denoted by general formula (III) are: methoxyethyl-ethoxyethyl acid phosphate, methoxyethyl-propoxyethyl acid phosphate, ethoxyethyl-propoxyethyl acid phosphate, ethoxyethyl-butoxyethyl acid phosphate, propoxyethyl-butoxyethyl acid phosphate, di(methoxyethyl) acid phosphate, di(ethoxyethyl) acid phosphate, di(propoxyethyl) acid phosphate, di(butoxyethyl) acid phosphate, di(pentyloxyethyl) acid phosphate, di(hexyloxyethyl) acid phosphate, di(heptyloxyethyl) acid phosphate, di(octyloxyethyl) acid phosphate, di(nonyloxyethyl) acid phosphate, and di(decyloxyethyl) acid phosphate. Preferred examples of phosphoric acid diesters are di(ethoxyethyl) acid phosphate, di(propoxyethyl) acid phosphate, di(butoxyethyl) acid phosphate, di(pentyloxyethyl) acid phosphate, and di(hexyloxyethyl) acid phosphate.

The total weight of components (C) and (D) desirably falls with a range of 0.005-0.1 percent of the total weight of components (A), (B), (C), and (D). When the total weight of components (C) and (D) falls below the above-stated range, it is difficult to achieve good mold releasing properties, and when the above-stated range is exceeded, molding defects sometimes occur due to peeling during polymerization and transparency is sometimes lost. More preferably, the total weight of components (C) and (D) falls within a range of 0.01-0.1 percent of the total weight of components (A), (B), (C), and (D).

The weight of component (C) desirably falls within a range of 30-70 percent of the total weight of components (C) and (D). When the weight of component (C) exceeds this range, there is a risk of foaming during polymerization, and when below this range, transparency sometimes decreases due to fogging. The weight of component (C) more preferably falls within a range of 35-65 percent of the total weight of components (C) and (D).

The use of a mixture of components (C) and (D) yields a molded article without fogging, with good transparency, and with good mold releasing properties. From the perspective of maximizing compatibility with other components, R₄ in general formula (II) and R₅ and R₆ in general formula (III) are preferably each independently alkyl groups with a carbon number of 2-6.

The transparent molded article of the present invention may be employed in optical applications such as lenses such as eyewear lenses and optical lenses; prisms, optical fiber; recording medium substrates employed in optical disks, magnetic disks and the like; and filters. The transparent molded article of the present invention can be employed in lenses, with particular preference in eyewear lenses.

A cured coating film may be present on the surface of the transparent molded article of the present invention. In the case of a lens, it is particularly desirable for a cured coating film to be present on optically functioning surfaces. Examples of cured coating films include the coating film obtained by curing the coating composition comprising components (E) and (F).

### Component (E)

Component (E) is an organic silicon compound denoted by general formula (IV) or a hydrolysis product thereof.

(R₇)ₐ(R₉)_{b}Si(OR₈)_{4-(a+b)} (IV)

(In general formula (IV), R₇ denotes an organic group comprising an epoxy group, methacryloxy group, mercapto group, amino group, or phenyl group; R₈ denotes an alkyl group with a carbon number of 1-4 or an acyl group with a carbon number of 1-4; R₉ denotes an alkyl group with a carbon number of 1-6; and a and b denote an integer 1 or 0.)

Specific examples of the organic silicon compound denoted by general (IV) are given below:
methyl silicate, ethyl silicate, n-propyl silicate, i-propyl silicate, n-butyl silicate, sec-butyl silicate, t-butyl silicate, tetraacetoxysilane, methyltrimethoxysilane, methyltriethoxysilane, methyltripropoxysilane, methyltriacetoxysilane, methyltributoxysilane, methyltriamyloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ -glycidoxypropylvinyldimethoxysilane, γ-glycidoxypropylvinyldiethoxysilane, γ-glycidoxyprupylphenyldimethoxysilane, γ-glycidoxypropylphenyldiethoxysilane, ethyltrimethoxysilane, ethyltriethoxysilane, vinyltrimethoxysilane, vinyltriacetoxysilane, vinyltriethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyl-triethoxysilane, chloromethyltrimethoxysilane, chloromethyltriethoxysilane, N-(β-aminoethyl)γ-aminopropyltrimethoxysilane, N-(β-aminoethyl)γ-aminopropylmethyldimethoxysilane, γ-aminopropylmethyldimethoxysilane, N-(β-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethoxydiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, and methylvinyldiethoxysilane.

### Component (F)

### Component (F) denotes metal oxide colloid particles.

Examples of the metal oxide colloid particles of component (F) are tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), and antimony oxide (Sb₂O₅); these may be employed singly or in combinations of two or more.

As for the quantity employed in the above-described coating composition, desired are 1-500 weight parts of the metal oxide colloid particles of component (F) per 100 weight parts of the organic silicon compound of component (E). At less than one weight part of the metal oxide colloid particles of component (F), no improvement in scratch resistance is achieved in the cured coating film. Conversely, at more than 500 weight parts, cracks tend to form between the cured coating film and the substrate and transparency tends to decrease.

Into the above-described coating composition, (1) curing agents to promote the reaction and (2) various surfactants to enhance wetting properties during coating and to increase the smoothness of the cured coating film can be suitably incorporated. Ultraviolet-absorbing agents, anti-oxidants and the like may also be added to the extent that they do not affect the physical properties of the cured coating film.

Examples of the above-mentioned curing agent are: amines such as allyl amine and ethyl amine; salts and metal salts comprising various acids and bases including Lewis acids and Lewis bases, such as organic carboxylic acids, chromic acid, hypochlorous acid, boric acid, perchloric acid, bromic acid, selenious acid, thiosulfuric acid, orthosilicic acid, thiocyanic acid, nitrous acid, aluminic acid, and carbonic acid; and metal alkoxides comprising aluminum, zirconium, and titanium, and metal chelate compounds thereof.

The above-described coating composition is applied to the surface of the transparent molded article of the present invention and cured to form a cured coating film. The coating composition is cured by hot air drying or activation energy irradiation. As for the curing conditions, Curing is desirably conducted in hot air at a temperature of 70-200°C, preferably 90-150°C. An example of activation energy radiation is far infrared radiation, which makes it possible to adjust a damage caused by heat at a low level.

As a method of forming a cured coating film comprised of the above-described coating composition on the substrate, applied are usual methods such as dipping, spinning, and spraying. From the perspective of surface precision, dipping and spinning are particularly preferred. Prior to applying the coating composition to the substrate, adhesion between the substrate and the cured coating film can be enhanced by chemical processing with an acid, alkali, or various organic solvents; physical treatments by plasma, ultraviolet radiation, ozone, and the like; cleaning employing various cleaning agents; and primer treatment employing various resins.

On the transparent molded article of the present invention, an antireflective film may be present directly on the molded article or on the above-described cured coating film. The type of antireflective film is not specifically limited; conventionally known inorganic oxides, MgF₂, and the like, may be employed in single or multiple layers. The antireflective films disclosed in Japanese Unexamined Patent Publication (KOKAI) Heisei No. 2-262104 and Japanese Unexamined Patent Publication (KOKAI) Showa No. 56-116003 may be employed. The cured coating film may also be employed as a multifunctional film by the addition of functional components such as antifogging, photochromic, and antigrime agents.
The antireflective film is a multilayer antireflective film, with at least one layer of the multilayer antireflective film being a high refractive index layer comprising niobium oxide. The high refractive index layer comprising niobium oxide may also comprise zirconium oxide and/or yttrium oxide.

### Embodiments

The present invention is specifically described by embodiments below. However, the present invention is not limited to the embodiments.

The various physical properties of plastic lenses obtained in embodiments and comparative examples of the invention were evaluated by the evaluation methods indicated below.

### (1) Mold releasing property

Denoted as UA were those in which stripping during polymerization, which caused molding failures such as a deformation of a lens surface and the like, did not occur, as well as releasing from a forming mold could be done without damages of a lens and a glass mold during peeling a glass obtained from a glass mold even if not applying a force. Denoted as A were those in which releasing from a forming mold required a little force, but could be easily done. These had good mold releasing properties and were acceptable on manufacturing. Conversely, denoted as B were those in which damages of a lens and a glass mold did not occur, but molding failures such as a deformation of a lens surface occurred. Denoted as C were those in which a lens and a glass mold were damaged. These had poor mold releasing properties and were unacceptable on manufacturing.

### (2) Transparency

The lens obtained was visually inspected under fluorescent lighting in a dark location. Lenses without fogging or precipitation of opaque substances were denoted as A. Those exhibiting slight fogging and the like were denoted as B. And those with severe fogging or clearly visible precipitation of opaque substances were denoted as C. Clearly, C were unsuitable as lenses.

### (3) Impact resistance

Steel balls weighing 16 g were allowed to drop naturally from a height of 1.27 m, as FDA standard, on the center of an S-4.00 lens with a center thickness of 1.3 mm. Those in which all test samples were unscathed were denoted as A, those in which fewer than 30 percent (but at least one piece) of the test samples were destroyed, for example, cracked or broke through were denoted as B, and those in which 30 percent or more samples were broken were denoted as C. A test was also conducted where the weight of the steel ball was increased to 1 kg and the same evaluations were made.

### (4) Antiyellowing property

### [Antiyellowing property during polymerization]

The 380-780 nm spectral spectrum of the lens was measured immediately following polymerization and the YI value was calculated from the results to evaluate the antiyellowing property for heat during polymerization. A YI values of less than 2.5 was ranked as A, 2.5 and above but less than 3.5 as B, and 3.5 and above as C.

### [Antiyellowing property for light]

The 380-780 nm spectral spectrum of the lens obtained was respectively measured before and after 200 hours of irradiation with a xenon lamp and the respective YI values were calculated from the results. The value obtained by subtracting the YI value prior to irradiation from the YI value following irradiation was denoted as ΔYI and was adopted as an indicator of the antiyellowing property for light. A ΔYI value of less than 1 was ranked as A, 1 and above but less than 2 as B, and 2 and above as C.
Those lenses having an antiyellowing property ranking of C for either or both heat and light, or B for both heat and light, were unsuitable as lenses.

### (Embodiment 1)

To 100 weight parts of isocyanate terminal prepolymer (denoted as ITP-1 in Table 1) having an isocyanate group content of 13 percent and comprised of polytetramethylene glycol with an average molecular weight of 400 and 4,4'-methylenebis(cyclohexyl isocyanate), 0.5 weight part of 4,4'-butylidene-bis(3-methyl-6-t-butylphenyl-di-tridecyl)phosphite (denoted as PO-1 in Table 1), 1.5 weight parts of 2-(2'-hydroxy-5'-t-octylphenyl)benzotriazol, 1.25 weight parts of bis(1,2,2,6,6-pentamethyl-4-piperidinyl)sebacate, 0.25 weight part of pentaerythritoltetrakis[3-(3,5-di-t-butyl-4-hydroxyphenyl)propionate] were respectively added in advance. The mixture was uniformly mixed and defoamed. Next, 25.5 weight parts of a mixture (denoted as DETDA in Table 1) of 3,5-diethyl-2,4-toluene diamine and 3,5-diethyl-2,6-toluene diamine were uniformly admixed at 60-70°C and stirred in short time at high speed. Immediately after stirring, the mixture was poured into a lens-forming glass mold and polymerized with heating for 15 hours at 120°C to obtain a plastic lens (transparent molded article). The various physical properties of the plastic lens obtained are given in Table 1. Table 1 reveals that the obtained plastic lens exhibited excellent antiyellowing property for heat and light, and had excellent transparency without fogging caused by cloud or scattering due to microcrystallization. The lens also had good impact resistance, remaining undamaged in ball drop tests employing not only 16 g balls, as FDA standard, but also 1 kg balls.

### (Embodiments 2-9)

With the exception that the components shown in Table 1 were employed, plastic lenses (transparent molded articles) were obtained by the same operation as in Embodiment 1. The various physical properties of these plastic lenses are shown in Table 1. Table 1 shows that the plastic lenses obtained exhibited excellent antiyellowing properties for heat and light, and had excellent transparency without fogging caused by cloud or scattering due to microcrystallization. The lens also had good impact resistance, remaining undamaged in ball drop tests employing not only 16 g balls, as FDA standard, but also 1 kg balls.

### (Comparative Example 1)

With the exception that PO-1 was not employed, the same operation was conducted as in Embodiment 1. The various physical properties of the plastic lens obtained are given in Table 1. Table 1 reveals that the plastic lens had excellent transparency without fogging caused by cloud or scattering due to microcrystallization, remaining undamaged in ball drop tests employing not only 16 g balls, as FDA standard, but also 1 kg balls. However, it had poor antiyellowiing property for heat and light.

### (Comparative Example 2)

With the exception that a sulfur-based peroxide decomposing agent in the form of ditridecyl-3,3'-thiodipropionate (denoted as SO-1 in Table 1) was employed in place of PO-1, the same operation was conducted as in Embodiment 1. The various physical properties of the plastic lens obtained are given in Table 1. Table 1 reveals that the plastic lenses obtained had poor transparency due to slight fogging and poor antiyellowing properties for heat and light, becoming colored lenses. Although they did not break in the 16 g ball drop test, as FDA standard, impact resistance was poor as cracks were observed in about 20 percent of the test samples when tested with 1 kg balls.

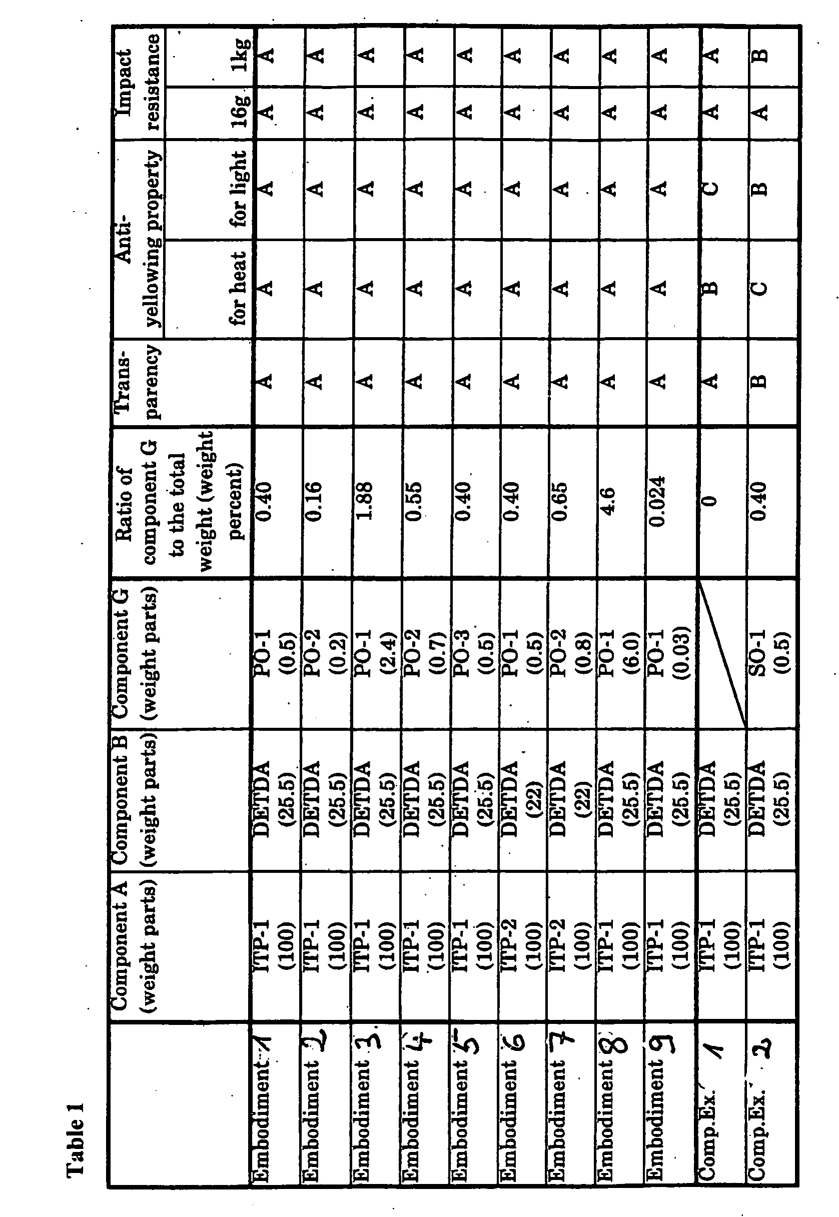

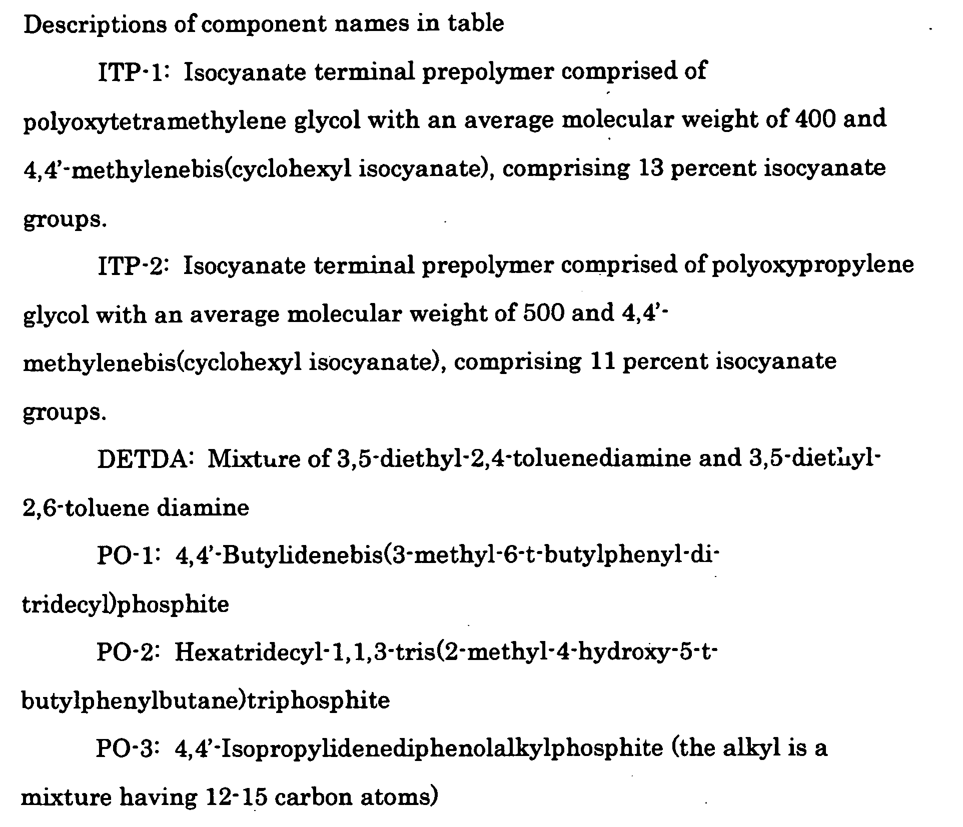

### (Embodiments of molded articles having cured coating films)

The plastic lenses (transparent molded articles) having cured coating films obtained in the embodiments and comparative examples were subjected to the scratch resistance test, adhesion test, appearance (transparency, surface condition and the like), and impact resistance test measurements described above to measure the various physical properties thereof.

### (Embodiment 10-1)

### (Preparation of Coating Solution)

While stirring 141 weight parts of water-dispersed colloidal silica (40 percent solid component, average particle size 15 millimicrons; component (F)) in a vessel made of glass and equipped with magnetic stirrer, 30 weight parts of acetic acid were added and the mixture was thoroughly mixed by stirring. Subsequently, 74 weight parts of γ-glycidoxypropyltrimethoxysilane (component (E)) were added dropwise and stirred for 24 hours at 5°C. Next, 100 weight parts of propylene glycol monomethylether, 150 weight parts of isopropyl alcohol, 0.2 part of silicone surfactant, and 7.5 weight parts of curing agent in the form of aluminum acetyl acetonate were added and the mixture was thoroughly stirred and filtered to prepare a coating composition solution.

### (Forming of cured coating film)

The plastic lens (transparent molded article) produced in Embodiment 1 described above was thoroughly cleaned by immersion for 5 min in a 10 percent sodium hydroxide aqueous solution at 55°C, after which a coating solution prepared by the above-described method was coated by dipping (lifting rate 20 cm/min) and heated for 2 hours at 120°C to form a cured coating film. Various evaluations were then conducted. The plastic lens (transparent molded article) having a cured coating film that was obtained had good scratch resistance, adhesion, appearance, and impact resistance.

### (Embodiment 10-2)

To a glass vessel equipped with magnetic stirrer, 189 weight parts of isopropyl alcohol-dispersed colloidal silica (made by Nissan Kagaku Kogyo: 30 percent solid component, average particle size 15 millimicrons; component (F)) were added, and 74 weight parts of γ-glycidoxypropyltrimethoxysilane (component (E)) were then added with stirring. While stirring, 19 weight parts of 10⁻² normal hydrochloric acid were added dropwise and stirring was conducted for 24 hours at 5°C. Next, 100 weight parts of propylene glycol monomethylether, 100 weight parts of isopropyl alcohol, 0.2 weight part of silicone surfactant, and 7.5 weight parts of curling agent in the form of aluminum acetyl acetonate were added and thoroughly mixed. The mixture was filtered to prepare a coating composition solution. Other than above-mentioned matter, the operation was conducted in the same manner as in Embodiment 10-1.
As shown in Table 2, the plastic lens (transparent molded article) having a cured coating film that was obtained exhibited the same good scratch resistance, adhesion, external appearance, and impact resistance as Embodiment 10-1.

### (Embodiment 10-3)

To a glass vessel equipped with magnetic stirrer, while 94 weight parts of a compound sol (made by Nissan Kagaku Kogyo, tradename HIS-40MH: methanol dispersion, 30 percent solid component; component (F)) comprised chiefly of tin oxide, tungsten oxide, zirconia oxide, and silicon oxide, and 94 weight parts of n-propyl cellosolve-dispersed colloidal silica (made by Nissan Kagaku Kogyo: tradename NPC-ST30, solid component 30 percent; component (F)) were thoroughly mixed with stirring, 67.0 weight parts of γ-glycidoxypropyltrimethoxysilane (component (E)) were added dropwise with stirring. Following the dropwise addition, 16 weight parts of 10⁻² normal hydrochloric acid, 230 weight parts of a solvent in the form of propylene glycol monomethylether, 0.2 weight part of silicone surfactant, and 3 weight parts of a curing promoter in the form of aluminum acetyl acetonate were added. The mixture was thoroughly stirred and filtered to obtain a coating composition.
Other than the above-mentioned matter, the operation was conducted in the same manner as in Embodiment 10-1.
As shown in Table 2, the plastic lens (transparent molded article) having a cured coating film that was obtained exhibited the same good scratch resistance, adhesion, external appearance, and impact resistance as Embodiment 10-1.

### (Comparative Examples 3-1 to 3-3)

With the exception that a lens comprised of diethylene glycol bisallylcarbonate polymer was employed in place of the plastic lens (transparent molded article) employed in Embodiments 10-1 to 10-3, the same operation as in Embodiments 10-1 to 10-3 was conducted. As shown in Table 2, these lenses all had poor impact resistance relative to the plastic lenses (transparent molded articles) of the present invention.

**Table 2**

| | Scratch resistance | Adhesion | Appearance | Impact resistance | |
|---|---|---|---|---|---|
| | | | | 16g | 1kg |
| Embodiment 10-1 | A | 100/100 | Good | A | A |
| Embodiment 10-2 | A | 100/100 | Good | A | A |
| Embodiment 10-3 | A | 100/100 | Good | A | A |
| Comp.Ex.3-1 | A | 100/100 | Good | A | B |
| Comp.Ex.3-2 | A | 100/100 | Good | A | B |
| Comp.Ex.3-3 | A | 100/100 | Good | A | B |

### Industrial applicability

According to the present invention, a molded article having excellent transparency and mold releasing property from a forming mold that is suited to optical applications, and a method of manufacturing the same can be provided. In particular, a molded article provided with good mold releasing property that is suited to optical applications without loss of transparency of polyurethane urea material as disclosed in U. S. Patent No. 6,127,505 mentioned above, and a method of manufacturing the same can be provided.
Furthermore, according to the present invention, a molded article suited to optical applications, which tends not to yellow for light and heat, and a method of manufacturing the same can be provided. In particular, a molded article provided with antiyellowing property for light and heat, that is suited to optical applications, without loss of transparency of materials which are obtained by cast polymerization of an aromatic diamine and an isocyanate terminal prepolymer having an intramolecular urethane bond as disclosed in U. S. Patent No. 6,127,505 mentioned above, and a method of manufacturing the same can be provided.

## Claims

1. A transparent molded article comprised of a polymer of the following components (A), (B), and (G), **characterized in that,**
component (A) represents an isocyanate terminal prepolymer in the form of a reaction product of an aliphatic diisocyanate having an intramolecular cyclic structure and a diol having an average molecular weight of 300 - 2,500;
component (B) represents one or more aromatic diamines denoted by general formula (I) 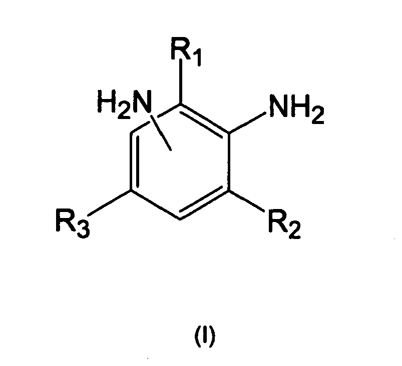 wherein R₁, R₂ and R₃ denote each independently any of a methyl, ethyl or a thiomethyl group, and
component (G) represents one or more phosphorous peroxide decomposing agents comprising a structure denoted by the general formula (V) 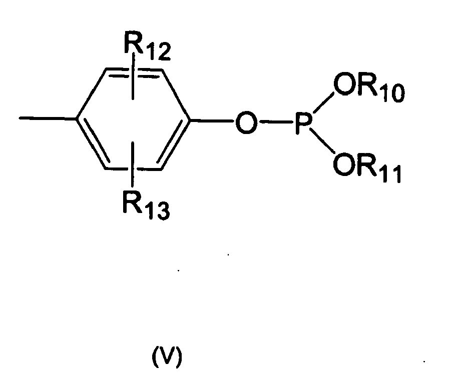 wherein
R₁₀ denotes a phenyl group optionally substituted with an alkyl group with a carbon number of 1 - 6, or an alkyl group with a carbon number of 1-16, and
R₁₁ denotes a phenyl group substituted with an alkyl group with a carbon number of 1 - 6, or an alkyl group with a carbon number of 1 -16, and
R₁₂ and R₁₃ are each independently any of a hydrogen atom or an alkyl group with a carbon number of 1 -10.

2. The transparent molded article according to claim 1, **characterized in that** the weight of component (G) ranges from 0.02 to 5.0 percent of the total weight of components (A), (B) and (G).

3. The transparent molded article according to claim 1 or 2, **characterized in that** in general formula (V) R₁₀ and R₁₁ denote an alkyl group with a carbon number of 12 - 14.

4. The transparent molded article according to any of claims 1 - 3, **characterized in that** the aliphatic diisocyanate having an intramolecular cyclic structure, that is a starting material of component (A), is an alicyclic diisocyanate.

5. The transparent molded article according to claim 4, **characterized in that** the alicyclic diisocyanate is at least one selected from the group consisting of 4,4'-methylenebis(cyclohexyl isocyanate), isophorone diisocyanate, 1,3-bis(isocyanate methyl)cyclohexane and norbornene diisocyanate.

6. The transparent molded article according to any of claims 1 - 5, **characterized in that** the diol having an average molecular weight of 300 - 2,500, that is a starting material of component (A), is a polyether diol or polyester diol.

7. The transparent molded article according to any of claims 1 - 6, **characterized in that** the isocyanate group content of component (A) ranges from 10 to 20 weight percent.

8. The transparent molded article according to any of claims 1 - 7, **characterized in that** in general formula (I), R₁ is a methyl group, and R₂ and R₃ are independently any of an ethyl group or thiomethyl group.

9. The transparent molded article according to any of claims 1 - 8, **characterized in that** the molar ratio of the isocyanate group of component (A) to an amino group of component (B) ranges from 1.00 to 1.15.

10. The transparent molded article according to any of claims 1 - 9, **characterized in that** the transparent molded article is a lens.

11. The transparent molded article according to claim 10, **characterized in that** the lens is an eyewear lens.

12. The transparent molded article according to any of claims 1 - 11, **characterized in that** said transparent molded article has a cured coating film on the surface.

13. The transparent molded article according to claim 12, **characterized in that** said cured coating film is obtained from a coating composition comprising components (E) and (F), wherein
component (E) represents an organic silicon compound denoted by general formula (IV)
(R₇)ₐ(R₉)_{b}Si(OR₈)_{4-(a+b)} (IV)
or a hydrolysis product thereof;
wherein R₇ is an organic group comprising an epoxy group, methacryloxy group, mercapto group, amino group, or phenyl group; R₈ denotes an alkyl group with a carbon number of 1 - 4 or an acyl group with a carbon number of 1 - 4; R₉ is an alkyl group with a carbon number of 1 - 6; and a and b denote an integer 1 or 0;
and
component (F) represents metal oxide colloid particles

14. The transparent molded article according to any of claims 1 - 13, wherein said transparent molded article has an antireflective film on the surface or on said cured coating film.

15. The transparent molded article according to claim 14, **characterized in that** said antireflective film is a multilayer antireflective film, and at least one layer of the multilayer antireflective film is a high refractive index layer comprising niobium oxide.

16. A method of manufacturing a transparent molded article, comprising forming a molded article by pouring mixture of components (A), (B) and (G) according to any of claims 1 - 9 into a forming mold, and then polymerizing components (A) and (B).

17. The method of manufacturing a transparent molded article according to claim 16, wherein said mixture is prepared by further mixing component (B) with a mixture of components (A) and (G).

## Patentansprüche

1. Transparenter Formkörper, der ein Polymer der folgenden Komponenten (A), (B) und (G) beinhaltet, **dadurch gekennzeichnet, dass**
die Komponente (A) ein terminales Isocyanat-Präpolymer darstellt, das in der Form Reaktionsproduktes aus einem aliphatischen Diisoiocanat, das eine intramolekulare cyclische Struktur besitzt, und einem Diol, welches ein mittleres Molekulargewicht von 300 - 2,500 aufweist, vorliegt;
die Komponente (B) ein oder mehrere aromatische(s) Diamin(e) darstellt gemäß der allgemeinen Formel (I) 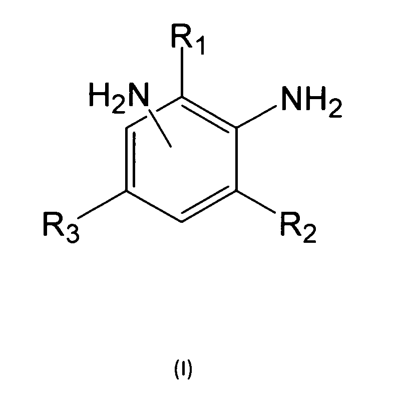 worin
R₁, R₂ und R₃ unabhängig voneinander jeweils eine Methyl-, Ethyl- oder eine Thiomethylgruppe bedeuten, und
die Komponente (G) ein oder mehrere Phosphorperoxid-zersetzende Agenz/Agenzien darstellt enthaltend eine Struktur gemäß der allgemeinen Formel (V) 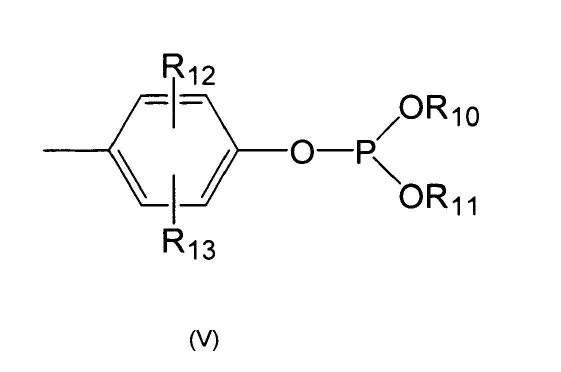 worin
R₁₀ eine Phenylgruppe bedeutet, die gegebenenfalls mit einer Alkylgruppe substituiert sein kann, die 1 bis 6 Kohlenstoffatome aufweist, oder eine Alkylgruppe bedeuten kann, die 1 - 16 Kohlenstoffatome aufweist;
R₁₁ eine Phenylgruppe bedeutet, die mit einer Alkylgruppe, die 1 bis 6 Kohlenstoffatome aufweist, substituiert ist, oder eine Alkylgruppe, die 1 bis 16 Kohlenstoffatome aufweist bedeutet, und
R₁₂ und R₁₃ unabhängig voneinander Wasserstoff oder eine Alkylgruppe mit 1 - 10 Kohlenstoffatomen bedeuten.

2. Transparenter Formkörper gemäß Anspruch 1, **dadurch gekennzeichnet, dass** das Gewicht der Komponente (G) in einem Bereich von 0.02 bis 5.0 Prozent des gesamten Gewichts der Komponenten (A), (B) und (G) liegt.

3. Transparenter Formkörper gemäß Anspruch 1 oder 2, **dadurch gekennzeichnet, dass** in der allgemeinen Formel (V) R₁₀ und R₁₁ eine Alkylgruppe mit 12 - 14 Kohlenstoffatomen bedeuten.

4. Transparenter Formkörper gemäß einem der Ansprüche 1 bis 3, **dadurch gekennzeichnet, dass** das aliphatische Diisocyanat, das eine intramolekulare cyclische Struktur besitzt und das Ausgangsmaterial für Komponente A ist, eine alicyclisches Diisocyanat verkörpert.

5. Transparenter Formkörper gemäß Anspruch 4, **dadurch gekennzeichnet, dass** das alicyclische Diisocyanat wenigstens eines ist, das ausgewählt ist aus der Gruppe bestehend aus 4,4'-Methylen-bis(cyclohexyl-isocyanat), Isophoron-diisocyanat, 1,3-Bis(isocyanatomethyl)cyclohexan und Norbornyldiisocyanat.

6. Transparenter Formkörper gemäß einem der Ansprüche 1 bis 5, **dadurch gekennzeichnet, dass** das Diol, das ein mittleres Molekulargewicht von 300 - 2,500 besitzt und das ein Ausgangsmaterial der Komponente A ist, ein Polyetherdiol oder ein Polyesterdiol verkörpert.

7. Transparenter Formkörper gemäß einem der Ansprüche 1 bis 6, **dadurch gekennzeichnet, dass** der Gehalt an Isocyanatgruppen der Komponente (A) in einem Bereich von 10 bis 20 Gewichtsprozent liegt.

8. Transparenter Formkörper gemäß einem der Ansprüche 1 bis 7, **dadurch gekennzeichnet, dass** in der allgemeinen Formel (I), R₁ eine Methylgruppe, und R₂ und R₃ unabhängig voneinander jeweils eine Ethylgruppe oder eine Thiomethylgruppe bedeuten.

9. Transparenter Formkörper gemäß einem der Ansprüche 1 bis 8, **dadurch gekennzeichnet, dass** das molare Verhältnis von Isocyanatgruppen der Komponente (A) zu Aminogruppen der Komponente (B) in einem Bereich von 1.00 zu 1.15 liegt.

10. Transparenter Formkörper gemäß einem der Ansprüche 1 bis 9, **dadurch gekennzeichnet, dass** der transparente Formkörper eine Linse darstellt.

11. Transparenter, Formkörper gemäß Anspruch 10, **dadurch gekennzeichnet, dass** die Linse eine Sehhilfe darstellt.

12. Transparenter Formkörper gemäß einem der Ansprüche 1 bis 11, **dadurch gekennzeichnet, dass** der transparente Formkörper einen gehärteten Beschichtungsfilm auf seiner Oberfläche aufweist.

13. Transparenter Formkörper gemäß Anspruch 12, **dadurch gekennzeichnet, dass** der gehärtete Beschichtungsfilm mittels einer Beschichtungskomposition enthaltend die Komponenten (E) und (F) erhalten wird,
worin
die Komponente (E) eine organisch Siliziumverbindung der allgemeinen Formel (IV)
(R₇)ₐ(R₉)_{b}Si(OR₈)_{4-(a+b)} (IV)
oder deren Hydrolyseprodukt darstellt,
worin
R₇ eine organische Gruppe umfassend eine Epoxy-, Methacryloxy-, Mercapto-, Amino- oder eine Phenylgruppe bedeutet;
R₈ eine Alkylgruppe mit 1 - 4 Kohlenstoffatomen oder eine Acylgruppe mit 1 - 4 Kohlenstoffatomen bedeutet;
R₉ eine Alkylgruppe mit 1 - 6 Kohlenstoffatomen und a sowie b eine ganze Zahl 1 oder 0 bedeuten;
die Komponente (F) kolloidale Metalloxid-Partikel darstellt.

14. Transparenter Formkörper gemäß einem der Ansprüche 1 bis 13, worin der transparente Formkörper einen antireflektierenden Film auf dem gehärteten Beschichtungsfilm aufweist.

15. Transparenter Formkörper gemäß Anspruch 14, **dadurch gekennzeichnet, dass** der antireflektierende Film ein vielschichtiger Film ist und wenigstens eine Schicht des vielschichtigen antireflektierenden Films einen hohen Brechungsindex aufweist und die Nioboxid enthält.

16. Verfahren zur Herstellung eines transparenten Formkörpers umfassend die Bildung eines Formkörpers durch Beschicken einer Form mit einer Mischung der Komponenten(A), (B) und (G) gemäß einem der Ansprüche 1 bis 9 und nachfolgendes Polymerisieren der Komponenten (A) und (B).

17. Verfahren zur Herstellung eines transparenten Formkörpers gemäß Anspruch 16, worin die Mischung durch zusätzliches Vermischen der Komponente (B) mit einer Mischung der Komponenten (A) und (G) hergestellt wird.

## Revendications

1. Article moulé transparent fait d'un polymère issu des composants (A), (B) et (G) suivant, **caractérisé en ce que :**
le composant (A) représente un prépolymère à terminaison isocyanate sous la forme d'un produit issu de la réaction d'un diisocyanate aliphatique ayant une structure cyclique intramoléculaire et d'un diol ayant un poids moléculaire moyen de 300-2500 ;
le composant (B) représente une ou plusieurs diamines aromatiques de formule générale (I) 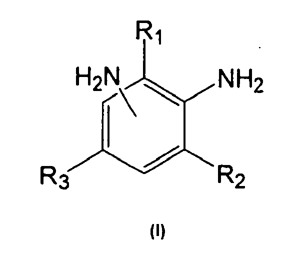
dans laquelle R₁, R₂ et R₃ représentent chacun, indépendamment, l'un quelconque parmi les groupes méthyle, éthyle ou thiométhyle, et
le composant (G) représente un ou plusieurs agents décomposant le peroxyde phosphoreux, comprenant une structure de formule générale (V) 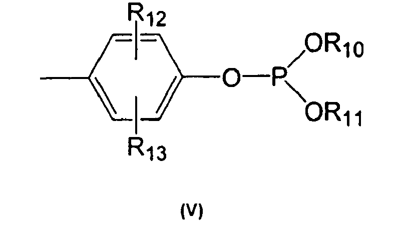 dans laquelle :
R₁₀ représente un groupe phényle facultativement substitué par un groupe alkyle ayant un nombre d'atomes de carbone de 1-6, ou un groupe alkyle ayant un nombre d'atomes de carbone de 1-16,
R₁₁ représente un groupe phényle substitué par un groupe alkyle ayant un nombre d'atomes de carbone de 1-6, ou un groupe alkyle ayant un nombre d'atomes de carbone de 1-16, et
R₁₂ et R₁₃ représentent chacun, indépendamment, l'un quelconque parmi un atome d'hydrogène ou un groupe alkyle ayant un nombre d'atomes de carbone de 1-10.

2. Article moulé transparent selon la revendication 1, **caractérisé en ce que** le poids du composant (G) est compris dans la gamme allant de 0,02 à 5,0 % du poids total des composants (A), (B) et (G).

3. Article moulé transparent selon la revendication 1 ou 2, **caractérisé en ce que,** dans la formule générale (V), R₁₀ et R₁₁ représentent un groupe alkyle ayant un nombre d'atomes de carbone de 12-14.

4. Article moulé transparent selon l'une quelconque des revendications 1-3, **caractérisé en ce que** le diisocyanate aliphatique ayant une structure cyclique intramoléculaire, c'est-à-dire une matière première du composant (A), est un diisocyanate alicyclique.

5. Article moulé transparent selon la revendication 4, **caractérisé en ce que** le diisocyanate alicyclique est au moins l'un sélectionné dans le groupe consistant en le 4,4'-méthylènebis(cyclohexyl isocyanate), l'isophorone diisocyanate, le 1,3-bis(isocyanatométhyl)cyclohexane et le norbornène diisocyanate.

6. Article moulé transparent selon l'une quelconque des revendications 1-5, **caractérisé en ce que** le diol ayant un poids moléculaire moyen de 300-2500, c'est-à-dire une matière première du composant (A), est un polyéther diol ou un polyester diol.

7. Article moulé transparent selon l'une quelconque des revendications 1-6, **caractérisé en ce que** la teneur en groupes isocyanate du composant (A) va de 10 à 20 % en poids.

8. Article moulé transparent selon l'une quelconque des revendications 1-7, **caractérisé en ce que,** dans la formule générale (I), R₁ est un groupe méthyle, et R₂ et R₃, sont indépendamment l'un quelconque parmi un groupe éthyle et un groupe thiométhyle.

9. Article moulé transparent selon l'une quelconque des revendications 1-8, **caractérisé en ce que** le rapport molaire entre le groupe isocyanate du composant (A) et un groupe amino du composant (B) va de 1,00 à 1,15.

10. Article moulé transparent selon l'une quelconque des revendications 1-9, **caractérisé en ce que** l'article moulé transparent est une lentille.

11. Article moulé transparent selon la revendication 10, **caractérisé en ce que** la lentille est une lentille pour lunetterie.

12. Article moulé transparent selon l'une quelconque des revendications 1-11, **caractérisé en ce que** ledit article moulé transparent a, en surface, un film de revêtement durci.

13. Article moulé transparent selon la revendication 12, **caractérisé en ce que** ledit film de revêtement durci est obtenu à partir d'une composition de revêtement comprenant des composants (E) et (F), dans laquelle :
le composant (E) représente un composé organique du silicium de formule générale (IV)
(R₇)ₐ(R₉)_{b}Si(OR₈)_{4-(a+b)} (IV)
ou un produit d'hydrolyse de celui-ci ;
formule dans laquelle R₇ est un groupe organique comprenant un groupe époxy, un groupe méthacryloxy, un groupe mercapto, un groupe amino ou un groupe phényle ; R₈ représente un groupe alkyle ayant un nombre d'atomes de carbone de 1-4 ou un groupe acyle ayant un nombre d'atomes de carbone de 1-4 ; R₉ est groupe alkyle ayant un nombre d'atomes de carbone de 1-6 ; et a et b représentent un entier 1 ou 0 ;
et
le composant (E) représente des particules colloïdales d'oxyde métallique.

14. Article moulé transparent selon l'une quelconque des revendications 1-13, ledit article moulé transparent ayant, sur sa surface ou sur ledit film de revêtement durci, un film antiréfléchissant.

15. Article moulé transparent selon la revendication 14, **caractérisé en ce que** ledit film antiréfléchissant est un film antiréfléchissant à couches multiples, et **en ce qu'**au moins une couche du film antiréfléchissant à couches multiples a une couche de fort indice de réfraction comprenant de l'oxyde de niobium.

16. Procédé de fabrication d'un article moulé transparent, comprenant la formation d'un article moulé en versant un mélange des composants (A), (B) et (G) selon l'une quelconque des revendications 1-9 dans un moule de formation, puis en polymérisant les composants (A) et (B).

17. Procédé de fabrication d'un article moulé transparent selon la revendication 16, dans lequel ledit mélange est préparé en mélangeant, en outre, le composant (B) avec un mélange des composants (A) et (G).
